Europäisches Patentamt

European Patent Office

Office européen des brevets

(11) Publication number : **0 507 746 A2**

# (12) EUROPEAN PATENT APPLICATION

(21) Application number : 92830145.6

(22) Date of filing : 25.03.92

(51) Int. Cl.⁵ : **G01N 15/02**

(30) Priority : 03.04.91 IT FI910076

(43) Date of publication of application :
07.10.92 Bulletin 92/41

(84) Designated Contracting States :
**DE ES FR GB**

(71) Applicant : **ISTITUTO NAZIONALE DI OTTICA**
**Largo Enrico Fermi No.6**
**I-50125 Arcetri Firenze (IT)**

(72) Inventor : **Longobardi, Giuseppe**
**Via dei Bardi n.20**
**I-50125 Firenze (IT)**
Inventor : **Francini, Franco**
**Via Fra B.da Quintavalle n.6**
**I-50124 Firenze (IT)**
Inventor : **Castellini, Carlo**
**Via G.B. Lulli N.50**
**I-50144 Firenze (IT)**

(74) Representative : **Mannucci, Gianfranco,**
**Dott.-Ing. et al**
**Ufficio Tecnico Ing. A. Mannucci Via della**
**Scala 4**
**I-50123 Firenze (IT)**

(54) **Method and device for measuring the particle size distribution of a flowing solid particulate substance.**

(57) The device for measuring the particle size distribution by means of image analysis comprises a source of illumination (1), a means (3) of capturing the image of the particles contained in the specimen to be measured, projected by said light source onto said means of capture, and means of processing the signals captured by said means of capture ; the source of illumination (1) is a pulsed source and a measuring chamber (5) with means to permit a continuous flow of the specimen is disposed between the source of illumination (1) and the means of capture (3).

Fig. 2

EP 0 507 746 A2

The invention relates to a method and a device for measuring the particle size distribution of a specimen by means of image analysis. More particularly, the invention relates to a method wherein a specimen to be measured is disposed between a light source and a means of capturing the image of the particles contained in said specimen, projected onto said means of capture, and wherein the signal obtained from said means of capture is processed to provide an indication of the distributions of the sizes of the particles contained in the specimen.

A method of this type is described in Italian Patent Application No. 69199 A/79 andin a subsequent Italian Patent Application No. 9504 A/81 which is an improvement of the method described in the previous patent. In these known methods, the specimen is substantially stationary with respect to the means of capture and is illuminated by a continuous source, in such a way as to project an image of the particles onto an array of sensors, for example an array of photoelectric transducers placed side by side. The image signal obtained in this way is processed to determine the particle sizes by means of indirect measurement on a series of sections of said particle. The size distribution of the powders contained in the specimen under examination is then calculated.

There are applications in which it is necessary to take a measurement while the specimen is flowing, for example in order to obtain data in real time on the particle size distribution of a specimen which may vary in time. Systems of indirect measurement, of the diffraction type, have been used for this purpose. These methods require long measurement periods for the calculation of the particle size distribution.

The invention relates to a method and a device for measuring the particle size distribution by means of image analysis (in other words by a direct method) even on specimens which are flowing.

The method according to the invention is substantially characterized by the fact that the specimen under examination is in motion and that the illumination of the specimen is provided discontinuously in pulses. This enables different specimens to be "photographed" in successive instants. The light pulse is of sufficiently brief duration, with respect to the flow velocity of the specimen, for the means of capture to observe a substantially fixed image. By the successive capture of a series of images it is possible to find the particle size distribution of the specimen in time, while the specimen flows through the measuring device.

Advantageous embodiments of the method according to the invention are indicated in the attached claims.

The device according to the invention comprises a source of illumination, a means of capturing the image of the particles contained in the specimen to be measured, and means of processing the signals captured by said means of capture. Characteristically, according to the invention, the device has a pulsed light source and a measuring chamber which is disposed between said source and the means of capture and which permits a continuous flow of the specimen.

Advantageous embodiments of the device according to the invention are indicated in the attached claims and are described in detail in the following text with reference to the attached figures.

The invention will be more clearly understood by following the description and the attached drawing which illustrates a non-restrictive practical example of the invention. In the drawing,

Fig. 1 is a block diagram of the device according to the invention;

Fig. 2 is a longitudinal section of the device;

Fig. 3 is a transverse section along III-III in Fig. 2;

Fig. 4 is a very concise flowchart of the operations performed by means of the device according to the invention; and

Figs 5 and 6 are, respectively, a view and partial section along V-V in Fig. 6 and a section along VI-VI in Fig. 5 of the measuring chamber.

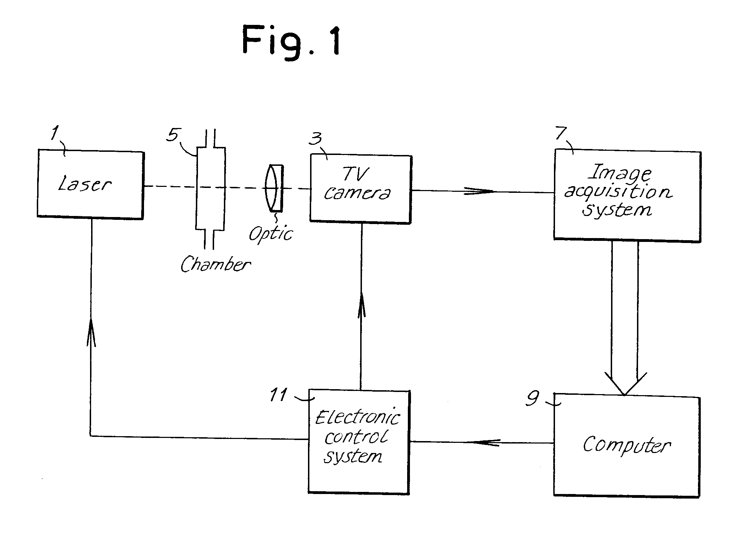

With reference to Fig. 1 initially, in very schematic terms the device comprises a source of illumination 1, in particular a pulsed laser, disposed facing a means of image capture 3. This means of capture may be a television camera synchronized with the pulsed laser in the way described subsequently. Between the source of illumination 1 and the means of capture 3 there is disposed a measuring chamber, schematically indicated by 5, in which flows the liquid specimen within which the particles are suspended. The light beam originating from the source 1 strikes the chamber 5 (with transparent walls). An optical system interposed between the chamber 5 and the television camera 3 projects the image of the particles contained in chamber 5 onto the television camera 3. This acquires an image which is transferred - through an image acquisition system of a known type indicated schematically by 7 - to a computer 9, which performs the analysis of the image and the calculation of the sizes of the particles captured, and subsequently the calculation of the particle size distribution with the production of histograms or diagrams if necessary.

The computer 9 also controls an electronic control system 11 which sends the signals in synchronism to the source of illumination 1 and to the television camera 3, in such a way that the latter is synchronized with the light pulses originating from the source 1, so that the television camera 3 can capture (owing to the brevity of the light pulse originating from the source 1 and the synchronism between this pulse and the scanning signal of the television camera) a substantially fixed image of a group of particles which in reality is moving at a determined velocity within the chamber 5.

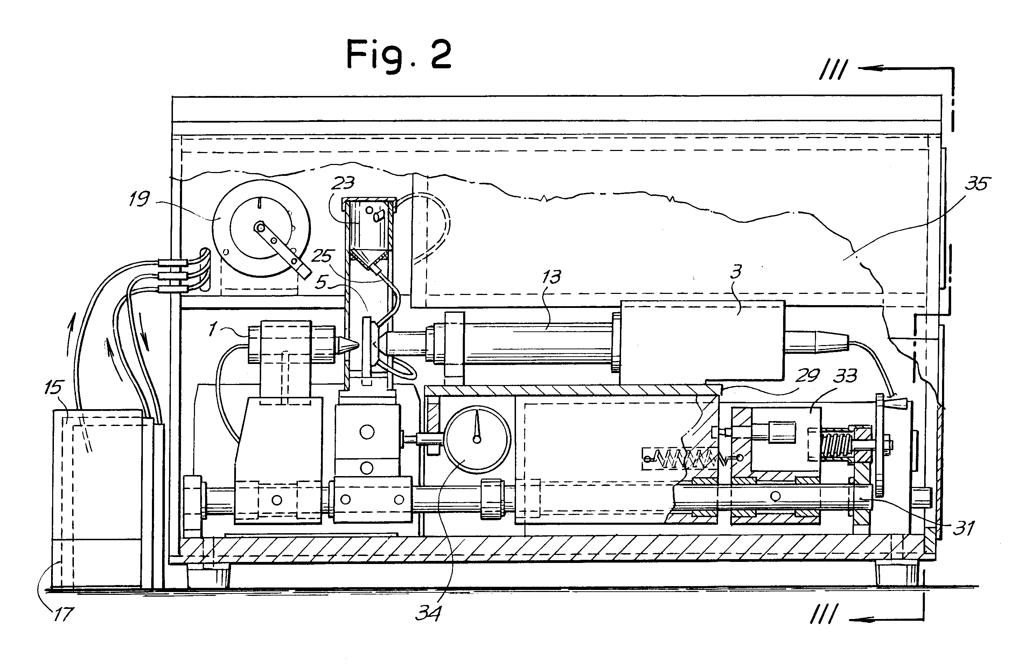

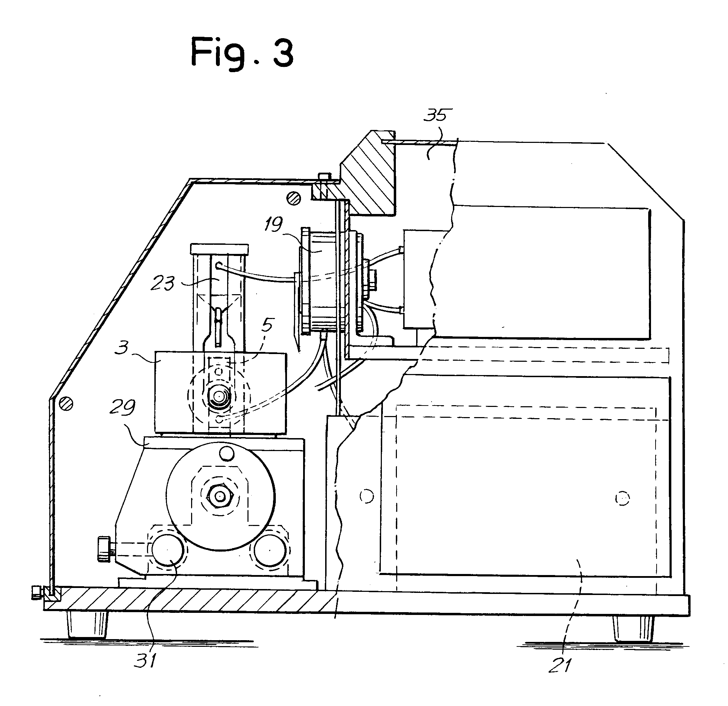

Figs 2 and 3 show constructional details of the device schematically summarized in the diagram in Fig. 1. More particularly, the source of illumination 1, the measuring chamber 5, and the television camera 3 disposed facing the source 1 and on the opposite side of the measuring chamber 5 are shown. Between the measuring chamber 5 and the television camera 3 there is disposed a microscope 13 which forms a magnifying optic for the television camera 3, enabling images of very small particles to be captured. The optic 13 has a frontal, in other words a distance between the specimen and the objective, which is sufficiently long to avoid interference with the walls of the measuring chamber 5. In addition, said optic has a depth of field which is sufficient with respect to the width of the chamber 5, and which in this case is approximately equal to said width.

The liquid specimen in which the particles in suspension are located is contained in a reservoir 15 for the dilution of the specimen if required, the reservoir being provided with a magnetic agitator 17 and connected to a three-way valve 19 for the loading of specimens for recycling, the loading of specimens for subsequent disposal, and the washing of the measuring chamber 5. The specimen is taken from the reservoir 15 by means of a pump 21, for example a peristaltic pump. The specimen pumped from the reservoir 15 is sent to an expansion tank 23 disposed above the measuring chamber 5 and connected to it by a tube 25. The measuring chamber 5 is also provided with a discharge tube 27.

The device is provided with focusing means comprising a slide 29, on which are mounted the television camera 3 and the microscope 13, carried by a supporting bar 31 and associated with a focusing system indicated as a whole by 33, which is of a known type and is not described in greater detail. The focusing system also includes a comparator 34 which is used to facilitate focusing whenever operations of replacement of the chamber 5 are performed.

Finally, the device has a compartment 35 in which the electrical components are housed.

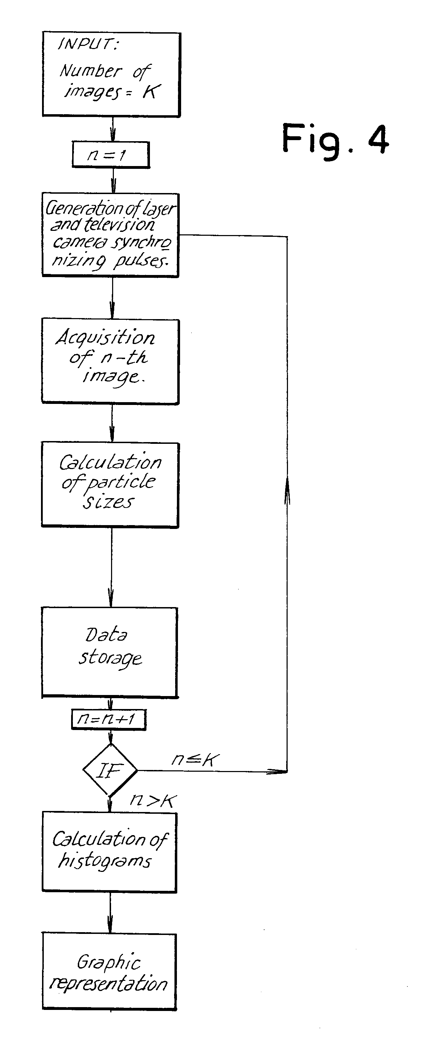

The process of capture and analysis of the image and measurement of the particle size distribution will now be described with reference to the summarized block diagram in Fig. 4. The number K of images which are to be captured is set in the computer 9. An initial pulse for synchronizing the laser illumination source 1 and the television camera 3 is then generated, and the corresponding image is acquired by the system 7 and transmitted to the computer 9 for the calculation of the particle sizes. This calculation is performed with image analysis software which is known per se (for example, a software package known commercially under the name GIPS, produced by Gate Data of Denmark, may be used). The data obtained from the calculation are stored; the counter N is then advanced, and the value of this counter is compared with the set value K; the process of pulse generation, image acquisition, calculation of sizes and storage is then repeated until the counter N exceeds the pre-set value K. At this point the computer 9 proceeds to calculate the histogram or other diagrams which summarize the particle size distribution determined from the processing of the K images captured. The same computer 9 may print out the calculated histograms or display them on screen.

Throughout the measurement process, the peristaltic pump 21 and the magnetic agitator 17 remain in operation, so that the specimen with the particles suspended in it is taken from the reservoir 15 and made to circulate through the expansion tank 23 into the measuring chamber 5.

The measuring chamber 5 may advantageously be made in modular form, to enable the width of the sampling volume to be easily modified. In this way it is possible (given the availability of a sufficient sampling volume and a sufficient depth of field for the optic 13) to measure highly diluted specimens, in other words those with a low concentration of particles. This increases the quantity of light incident on the television camera 3, making it possible to obtain a greater contrast and ultimately a better image quality.

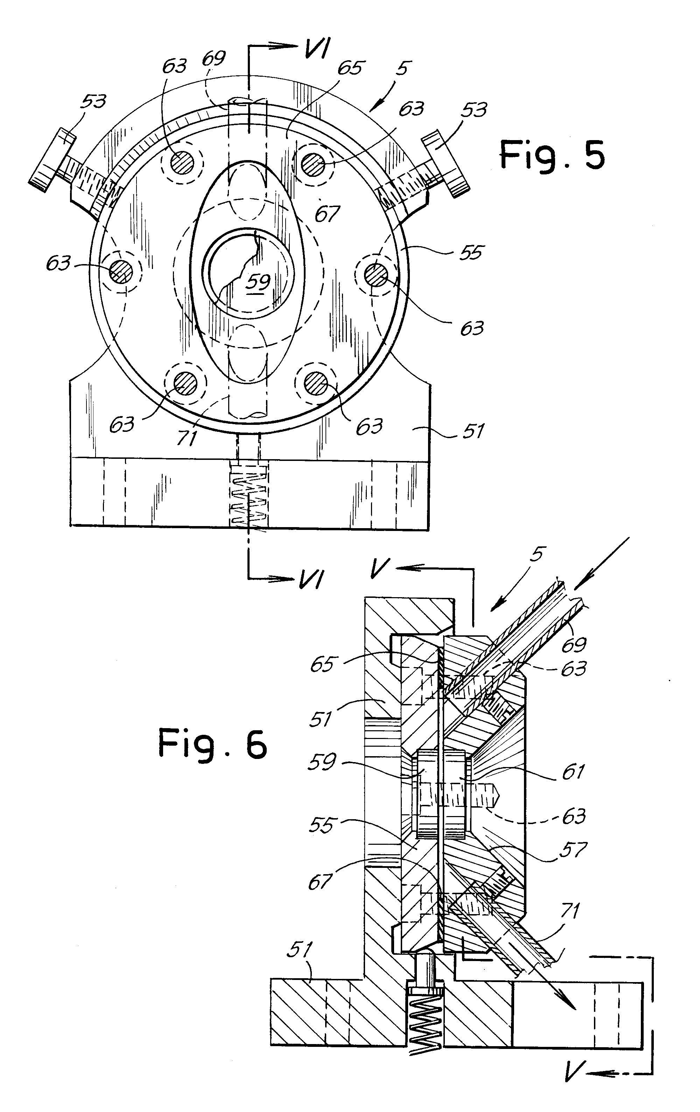

Figs 5 and 6 show a particular embodiment of the measuring chamber 5. The chamber is mounted on a support 51 by means of securing knobs 53. The actual chamber consists of two flanges 55, 57 which have two central optical glass ports 59 and 61. The two flanges are joined together by screws 63 and a metal plate 65, made of stoved copper for example, which acts as a spacer and is placed between them. The metal plate 65 has a central elliptical aperture 67 which is coaxial with the two ports 59, 61. The space within the aperture 67, delimited by the elliptical edge of the aperture and by the internal faces of the ports 59, 61, forms the volume of the chamber which is connected, to permit a flow, to the reservoir 15 by means of a first inlet tube 69 and a second outlet tube 71. The two tubes 69, 71 are inclined at a suitable angle with respect to the horizontal to avoid the sedimentation of the particles in the chamber 5.

The depth of the measuring chamber may easily be varied by replacing the plate 65 without the replacement of other elements of the chamber and without the necessity of restoring the connection to the tubes 69, 71, which may remain connected to the corresponding flange 57.

It is to be understood that the drawing shows only an example provided solely as a practical demonstration of the invention, it being possible to vary the invention in its forms and arrangements without thereby departing from the scope of the concept of said invention.

## Claims

1. A method of measuring the particle size distribution by means of image analysis, wherein a specimen to be measured is disposed between a light source and a means of capturing the image of the particles contained in said specimen, projected onto said means of capture, and wherein the signal obtained from said means of capture is processed to provide an indication of the distribution of the sizes of the particles contained in the specimen, wherein:
   – the specimen under examination is in motion, and
   – the illumination of the specimen is provided discontinuously in pulses.

2. The method as claimed in claim 1, wherein:
   a) a pulse for synchronizing the source of illumination and the means of capture is generated;
   b) an image is acquired;
   c) the image data are transmitted to a computer for the calculation of the particle sizes and the storage of the data;
   d) stages (a), (b) and (c) are repeated for a predeterminable number of cycles; and
   e) the particle size distribution in the specimen is calculated on the basis of the stored data.

3. The method as claimed in claim 1 or 2, wherein the specimen is illuminated by a pulsed laser source.

4. The method as claimed in claim 1, 2 or 3, wherein the specimen consists of a fluid medium in motion, in which the particles are suspended.

5. A device for measuring the particle size distribution by means of image analysis, comprising a source of illumination, a means of capturing the image of the particles contained in the specimen to be measured, projected by said light source onto said means of capture, and means of processing the signals captured by said means of capture, wherein:
   – said source of illumination is a pulsed source; and
   – a measuring chamber with means to permit a continuous flow of the specimen is disposed between the source of illumination and the means of capture.

6. The device as claimed in claim 5, wherein the source of illumination is a pulsed laser.

7. The device as claimed in claim 5 or 6, wherein the means of capturing the image is a television camera.

8. The device as claimed in claim 5, 6 or 7, comprising means of generating a pulse for synchronizing the source of illumination and the means of capture.

9. The device as claimed in one or more of claims 5 to 8, comprising a computer which processes the image signals originating from said means of capture and which sends synchronizing pulses to said source of illumination and to said means of capture.

10. The device as claimed in claim 9, wherein said computer is programed to perform a predeterminable number of operations of capturing and processing image signals and to determine, from the data processed from said captured signals, the particle size distribution in the specimen under examination.

11. The device as claimed in one or more of claims 5 to 10, wherein said means of capture is associated with a focusing optic and if necessary a magnifying optic.

12. The device as claimed in claim 11, wherein said optic has a depth of field close to the depth of the measuring chamber measured in the direction of the illuminating beam originating from said source of illumination.

13. The device as claimed in one or more of claims 5 to 12, wherein said measuring chamber has two flanges carrying transparent wall portions and, between said two flanges, a spacer in plate form with an aperture defining the specimen-holding volume of the chamber.

14. The device as claimed in claim 13, wherein said spacer in plate form is interchangeable.

15. The device as claimed in claim 12 or 13, wherein the tubes for the admission and discharge of the specimen are connected to one of said two flanges.

16. The device as claimed in claim 14, wherein said tubes are inclined with respect to the plane defined by the spacer in plate form.

17. The device as claimed in one or more of claims 5 to 15, wherein an expansion tank is disposed ahead of said measuring chamber.

18. The device as claimed in one or more of claims 5 to 16, comprising a reservoir in which the specimen is diluted and kept agitated.

# Fig. 1

# Fig. 2

EP 0 507 746 A2

# Fig. 3

Fig. 4

Fig. 5

Fig. 6